# EUROPEAN PATENT APPLICATION

(11) **EP 3 480 584 A1**
(43) Date of publication of application: **08.05.2019**
(21) Application number: 17199780.2
(22) Date of filing: 02.11.2017
(51) Int. Cl.: G01N 21/71, F02P 23/04, G01N 21/72, G01N 21/85, G01J 3/443

(54) **OPTICAL PROBE**

(71) Applicant: Siemens Aktiengesellschaft, 80333 München (DE)
(72) Inventor: GRIFFITHS, Jonathan, Lincoln, LN1 3HN (GB); KIRK, Anthony, Lincoln LN4 2FT (GB); RUIJSENAARS, Herman, Lincoln LN1 2WT (GB)
(74) Representative: Maier, Daniel Oliver

(57) **Abstract**

An optical probe 100 for a gas turbine is described. The probe 100 comprises a body 110 having a passageway 120 arranged therethrough to define an optical path P. The probe 100 comprises an optical focussing member 130 arranged in the passageway 120 to define an optical focal point FP in a region R therebeyond. The probe 100 comprises a first optical window 140 arranged in the passageway 120 between the optical focussing member 130 and the optical focal point FP. The probe 100 comprises a first sealing member 150 arranged between the first optical window 140 and the body 110 to isolate the passageway 120 from the region R.

## Description

The present disclosure relates to an optical probe for laser applications.

In particular the disclosure is concerned with an optical probe for an internal combustion engine, such as a gas turbine, for spectroscopy therein, for example atomic emission spectroscopy such as laser induced breakdown spectroscopy (LIBS) or flame spectroscopy of fuel and/or a combustion product thereof, and/or ignition of fuel therein.

### Background

Gas turbines typically combust gas and/or liquid fuel, including bio-fuels such as bio-gas and/or bio-oil. Generally, fuel quality may affect combustion dynamics, emissions and/or blowout of internal combustion engines, such as gas turbines. Fuel quality may relate to contaminants (for example metallic, inorganic, organic and/or water contaminants) present in the fuel and/or energy content (also known as calorific value) of the fuel. Some ash-forming contaminants present in fuels may lead to high temperature corrosion, ash deposition and/or fuel system fouling. Ash-forming contaminants may include oil-soluble metallo-organic compounds, water-soluble salts and/or solid foreign contamination. A presence and/or concentration of specific contaminants may vary with a geographical source of the fuel and may be concentrated in residual fractions during refining or local processing. Poor quality fuel may accelerate fouling of burners in the gas turbines, resulting in flame failure and unexpected shutdown of the gas turbines. Restarting the gas turbines may require maintenance and/or replacement of the burners. Poor quality fuel may result in increased emissions, which is undesirable and/or not permitted by regulation. Poor fuel quality may adversely affect power output by the gas turbine, requiring increased fuel feed rates.

Typically, fuel quality may be determined using atomic spectroscopy, particularly atomic emission spectroscopy. For example, ASTM D6728-16 describes a standard test method for determination of contaminants in gas turbine and diesel engine fuel by rotating disc electrode atomic emission spectrometry. Such testing of fuel may be conducted on-site, for example, and may require on-site analytical instrument performance of below 1.0 mg/kg for several contaminants.

However, while gas turbines may be robust to dynamically changing (i.e. time-varying) fuel quality during combustion thereof, restarting the gas turbines after scheduled and/or unscheduled shutdown may be problematic if the fuel quality has changed. For example, re-ignition parameters for restarting the gas turbines may be based on historic fuel quality and/or lower calorific value (LCV). This is particularly problematic when associated gas or gas fuel is provided directly from a natural reservoir, such as a gas turbine operating on a gas platform, combustion gas obtained directly therefrom without refinement, fuel quality of which may be time-varying.

Hence, it is highly desirable to improve determination of fuel quality.

### Summary

According to the present disclosure there is provided an optical probe for a gas turbine, a laser assembly for a gas turbine comprising an optical probe, a method of installing an optical probe and use of an optical probe as set forth in the appended claims. Other features of the invention will be apparent from the dependent claims, and the description which follows.

According to a first aspect, there is provided an optical probe for a gas turbine, the probe comprising:
a body having a passageway arranged therethrough to define an optical path;
an optical focussing member arranged in the passageway to define an optical focal point in a region therebeyond; and
a first optical window arranged in the passageway between the optical focussing member and the optical focal point;
wherein the probe comprises a first sealing member arranged between the first optical window and the body to isolate the passageway from the region.

In this way, the probe may be provided through an aperture or casing wall of the gas turbine and/or combustor hardware therein (generally referred to herein as a wall of the gas turbine), enabling *in situ* and/or online determination of fuel quality of fuel therein by atomic emission spectroscopy, for example. In this way, the determined fuel quality may be used to determine (re)ignition parameters for (re-)starting the gas turbine, rather than using historic fuel quality information, for example, thereby improving a likelihood of (re-)starting.

In this way, the probe may be provided through a wall of the gas turbine, enabling *in situ* and/or online determination of a combustion product and/or a plurality of combustion products therein by atomic emission spectroscopy, for example. In this way, the determined combustion product(s) may be used to identify and/or control emissions from the gas turbine.

In this way, the probe may be provided through a wall of the gas turbine, enabling laser ignition of fuel therein, for example. In this way, reliability of (re-)starting the gas turbine may be improved.

In this way, in-process determination of the fuel quality for gaseous or liquid fuels used during operation of the gas turbine, for example using LIBS, may be provided. In-process determination of fuel quality provides monitoring of fuel quality periodically during operation of the gas turbine, without a need for offline testing of fuel samples.

Particularly, the probe may be arranged to extend through an aperture or casing wall of the gas turbine and/or combustor hardware therein. The passageway arranged in the body of the probe thus defines the optical path for light emitted from within the gas turbine and/or for light, for example a laser pulse, transmitted into the gas turbine. For example, before ignition of the fuel, light emitted by laser induced breakdown spectroscopy (LIBS) of the fuel may be used to determine fuel quality, as described below in more detail. For example, during combustion of the fuel, light emitted by flame spectroscopy of a combustion product of the fuel may be used to determine the combustion product, as described below in more detail. For example, a laser pulse transmitted into the gas turbine may be used to ignite fuel therein. In other words, the probe defines the optical path for light in to and/or out of the gas turbine.

Generally, atomic emission spectroscopy (AES) is a chemical analysis method that uses an intensity of light emitted from a flame, plasma, arc, or spark at a particular wavelength to determine an amount of an element present in a sample. The wavelength of an atomic spectral line identifies the element while the intensity of the emitted light is proportional to the amount of the element present in the sample.

Laser-induced breakdown spectroscopy (LIBS) (also known as laser-induced plasma spectroscopy (LIPS)) is a type of atomic emission spectroscopy. Generally, a highly energetic laser pulse is used as an excitation source. The laser pulse is focused to form a plasma, which atomizes and excites a sample. Initially, the plasma emits a continuum of radiation which does not contain useful information about the elements present. However, the plasma rapidly expands at supersonic velocities and cools, whereupon characteristic atomic emission lines of the elements may be detected by a detector. Accordingly, the LIBS laser pulse is transmitted through the optical path defined by the probe and focussed by the optical focussing member at the optical focal point in a region therebeyond (i.e. within the gas turbine) to form a plasma. The plasma thus atomizes and excites the fuel in the gas turbine. Light, characteristic of atomic emission lines of respective elements present in the fuel, may be transmitted through the optical path defined by the probe and hence to the LIBS detector. In one example, the probe comprises and/or is a LIBS probe.

Flame emission spectroscopy (FES) is a type of atomic emission spectroscopy. Generally, a sample is brought into a flame and thermal energy from the flame breaks chemical bonds in the sample, creating free atoms. The thermal energy also excites the atoms into excited electronic states that subsequently emit light when they return to ground electronic states. The light may be detected by a detector. Accordingly, the light emitted by the atoms is transmitted through the optical path defined by the probe and hence to the FES detector. In one example, the probe comprises and/or is a FES probe.

Accordingly, an ignition laser pulse may be transmitted through the optical path defined by the probe and focussed by the optical focussing member at the optical focal point in a region therebeyond (i.e. within the gas turbine) to form a plasma, thereby igniting the fuel. In one example, the probe comprises and/or is a laser ignition probe.

The probe is for the gas turbine. In use, the probe must be capable of withstanding a pressure of at least 1.9 MPa and a temperature of at least 900 °C.

The probe comprises the body having the passageway arranged therethrough to define the optical path. In one example, the body comprises and/or is an elongate body, arranged to extend through, for example completely through, a wall of the gas turbine. In one example, the body comprises a tubular body, for example having a circular cross-section.

In one example, the body comprises a heat-resistant material. In one example, the body comprises a high temperature alloy for example a superalloy, a nickel-based alloy such as Inconel (RTM) 600, 617, 625, 690, 718 or X-750, Haynes 230 or Hastelloy (RTM) B-3, C-4, C-2000, C-22, C-276, G-30, N, an iron based alloy and/or a cobalt-based alloy. In this way, the probe may withstand a temperature of at least 900 °C. Inconel 600 and/or Haynes 230 is preferred.

In one example, the body comprises an externally threaded portion (i.e. a male threaded portion). In this way, the probe may be coupled to the gas turbine by threading the externally threaded portion into a corresponding internally threaded portion (i.e. a female threaded portion) in the gas turbine.

In one example, the externally threaded portion corresponds with an externally threaded portion of a conventional high energy electrical igniter. In this way, the probe may replace the conventional electrical igniter for the gas turbine, for example as a retrofit or upgrade replacement.

In one example, a size of the probe generally corresponds with a size of a conventional electrical igniter for the gas turbine. In this way, the probe may replace the conventional electrical igniter for the gas turbine, for example as a retrofit or upgrade replacement.

The probe comprises the optical focussing member arranged in the passageway to define the optical focal point in a region therebeyond. In this way, the probe may focus a laser pulse, for example, thereby forming a plasma for LIBS and/or ignition.

In one example, the optical focussing member comprises a plano-convex lens. Generally, plano-convex lenses are positive focal length elements that have one spherical surface and one flat surface. Generally, plano-convex lenses provide beam focusing with reduced distortion from spherical aberrations. Generally, plano-convex lenses are cheaper than bi-convex lenses, for example.

The probe comprises the first optical window arranged in the passageway between the optical focussing member and the optical focal point. In this way, light transmitted along the optical path may enter and/or exit the probe via the first optical window.

In one example, the first optical window comprises a planar optical window. In this way, refraction of light transmitted through the first optical window is reduced.

In one example, the first optical window comprises at least one selected from a group comprising: fused silica, sapphire, calcium fluoride, magnesium fluoride, crystal quartz and borosilicate glass. In this way, the probe may withstand a temperature of at least 900 °C.

The probe comprises the first sealing member arranged between the first optical window and the body to isolate the passageway from the region. In this way, the region within the gas turbine is sealed from the ambient environment outside of the gas turbine, thereby preventing leakage of fuel and/or combustion products thereof, for example, from the gas turbine. In this way, the probe is capable of withstanding a pressure of at least 1.9 MPa.

In one example, the first sealing member comprises a sheet material, for example a gasket. In this way, a low profile seal may be provided, better isolating the passageway from the region. Gaskets may be readily provided from different materials and/or in different sizes.

In one example, the first sealing member comprises at least one selected from a group comprising: graphite, mica, aramid, glass, carbon fibre, PTFE and vermiculite. More generally, the first sealing member comprises a heat-resistant sealing material. In this way, the probe may withstand a temperature of at least 900 °C and a pressure of at least 1.9 MPa. Thermiculite (RTM) 815, including aramid and vermiculite, is preferred. Similar resilient proprietary materials with high temperature sealing properties, to withstand the local environment temperature and pressure conditions, may be used as alternatives.

In one example, the first sealing member comprises an aperture therethrough, for transmission of light therethrough, for example along the optical path P.

In one example, the probe comprises a spacing member arranged to define a spacing between the optical focussing member and the first optical window. In this way, the defined optical focal point may be at a predetermined point in the region therebeyond. In one example, the optical focal point is at a distance from an end of the body in a range from 1 mm to 10 mm, preferably in a range from 2 mm to 8 mm, more preferably in a range from 3 mm to 6 mm.

In one example, the probe comprises a second optical window arranged in the passageway. The second optical window may be as described with respect to the first optical window.

According to a second aspect, there is provided a laser assembly for a gas turbine, the assembly comprising a laser and an optical probe according to the first aspect.

In this way, the assembly may be used to ignite fuel in the gas turbine using the laser and/or form a plasma for LIBS.

In one example, the laser is a solid-state laser, for example a Nd:YAG solid-state laser. Examples of suitable lasers include flashlamp or diode pumped Q-switched Nd:YAG lasers and vertical-cavity surface-emitting laser (VCSEL) end-pumped passively Q-switched Nd:YAG/Cr4+ micro-lasers.

In one example, the first laser pulse has a wavelength in a range from 532 nm to 1064 nm (i.e. visible to near-infrared). In one example, the first laser pulse has a duration in a range from 0.1 ns to 100 ns, preferably in a range from 0.5 ns to 30 ns, more preferably in a range from 1 ns to 30 ns, most preferably in a range from 1 ns to 10 ns, for example 4 ns. In one example, the first laser pulse has an energy in a range from 1 mJ to 1000 mJ, preferably in a range from 10 mJ ns to 750 mJ, more preferably in a range from 100 mJ to 500 mJ, for example 290 mJ. The laser may be arranged to provide such pulses at a rate of at least 1 Hz, preferably at least 2 Hz, more preferably at least 5 Hz, for example 10 Hz. A wavelength, pulse duration, pulse energy and/or beam quality should be such that a laser pulse is capable of producing an intensity at focus in excess of that required for laser induced breakdown of the transmissive medium, typically greater than 1x10¹² W/cm².

In one example, the first laser pulse has a beam quality factor M² of at most 5, preferably at most 4, more preferably at most 3, most preferably at most 2.

In one example, the assembly comprises an optical detector, for example a photomultiplier and/or a charge coupled detector (CCD). In this way, light emitted, for example by atomic emission spectroscopy of fuel and/or a combustion product thereof, may be detected. In one example, the assembly comprises a monochromator (scanning) and/or a polychromator (non-scanning).

In one example, the assembly comprises a dichroic optical member, for example a dichroic mirror. The dichroic optical member may be arranged to reflect a laser pulse and to transmit a spectral emission from a laser induced plasma. In this way, a laser pulse from the laser may be reflected by the dichroic optical member, for example towards the optical probe, and light emitted, for example by atomic emission spectroscopy of fuel and/or a combustion product thereof, may be transmitted by the dichroic optical member, for example towards the optical detector.

According to a third aspect, there is provided method of installing an optical probe according to the first aspect in a gas turbine, the method comprising:
removing an electrical igniter from the gas turbine; and
replacing the removed electrical igniter with the probe.

In this way, the probe may replace the conventional electrical igniter for the gas turbine, for example as a retrofit or upgrade replacement.

In one example, removing the electrical igniter from the gas turbine comprises unscrewing the electrical igniter from a threaded aperture therein and replacing the removed electrical igniter with the probe comprises screwing the probe into the same threaded aperture.

According to a fourth aspect, there is provided use of an optical probe according to the first aspect for spectroscopy in a gas turbine, for example atomic emission spectroscopy such as laser induced breakdown spectroscopy (LIBS) or flame spectroscopy of fuel and/or a combustion product thereof, and/or ignition of fuel in the gas turbine.

According to a fifth aspect, there is provided a gas turbine comprising an optical probe according to the first aspect.

### Brief Description of the Drawings

Examples of the present disclosure will now be described with reference to the accompanying drawings, in which:
Figure 1 schematically depicts a longitudinal section of a typical gas turbine;
Figure 2A schematically depicts a longitudinal section of a typical combustor and Figure 2B schematically depicts a section along line III-III in Figure 2A;
Figure 3 schematically depicts a perspective view of an optical probe according to an exemplary embodiment;
Figures 4 schematically depicts a longitudinal cross-section view of the optical probe of Figure 3;
Figures 5A and 5B schematically depict the optical probe of Figure 3, in use;
Figure 6 schematically depicts a laser assembly according to an exemplary embodiment, in use; and
Figure 7 schematically depicts a method of installing an optical probe according to an exemplary embodiment.

### Detailed Description

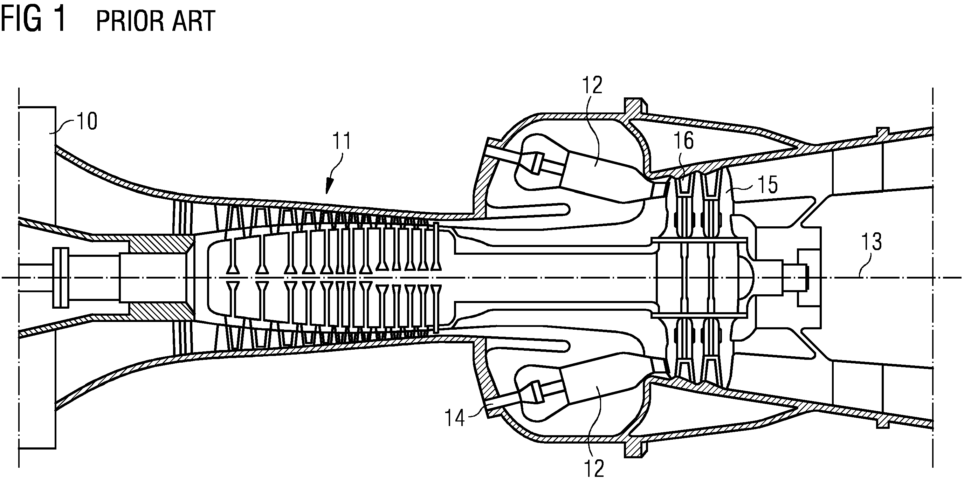

Figure 1 shows an example of a typical gas turbine arrangement. The gas turbine comprises an air inlet 10 at one end followed by a compressor stage 11 in which incoming air is compressed for application to one or more combustors 12, which are distributed circumferentially around the turbine axis 13. Fuel is introduced into the combustors at 14 and is there mixed with a part of the compressed air leaving the compressor stage 11. Hot gases created by combustion in the combustors are directed to a set of turbine blades 15, being guided in the process by a set of guide vanes 16, and the turbine blades 15 and the shaft forming the axis 13 are turned as a result. The turbine blades 15 in turn rotate the blades of the compressor stage 11, so that the compressed air is supplied by the gas turbine itself once this is in operation.

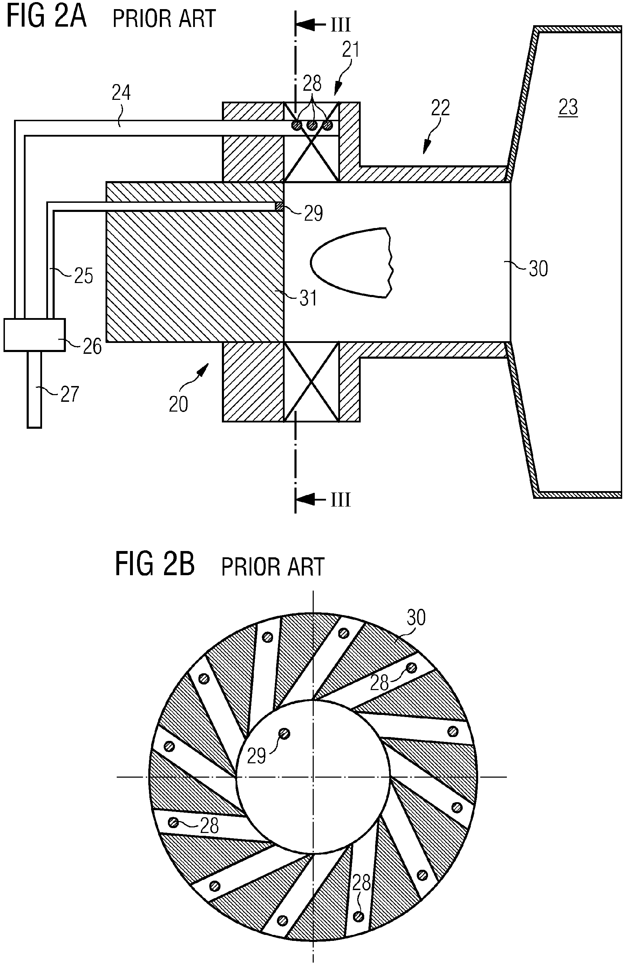

Part of a typical combustor is shown in Figure 2A. Figure 2B shows a section along a line III-III shown in Figure 2A. The combustor is in four parts: a front-end part 20, a swirler part 21, a burner pre-chamber part 22 and a combustion volume 23. Main fuel is introduced into the swirler 21 by way of the front-end part 20 through a conduit 24, while pilot fuel enters the burner space through a conduit 25 having at its end a pilot-fuel nozzle 29. The main and pilot fuel-flows are derived from a fuel-split valve 26, which is fed with a fuel supply 27 representing the total fuel supply to the combustor. The main fuel flow enters the swirler through a set of main-fuel nozzles (or injector) 28, from where it is guided along swirler vanes 30, being mixed with incoming compressed air in the process. The fuel may be gaseous fuel or liquid fuel. The resulting air/fuel mixture maintains a burner flame 30. The hot air from this flame enters the combustion volume 23. A gas turbine will often comprise a number of such combustors.

Generally, the optical apparatus and/or optical assembly described herein are for Dry Low Emissions (DLE) gas turbines, as described above. For conventional diffusion flame combustion systems (such as those of the non Dry Low Emissions (DLE) type), the pilot fuel flow system may be omitted but the applicability of a laser ignitor, such as described herein, which is physically and functionally interchangeable with conventional high energy spark ignitors when supplied with its attendant laser source and distribution system, provides a relevant and/or valid alternative ignition system.

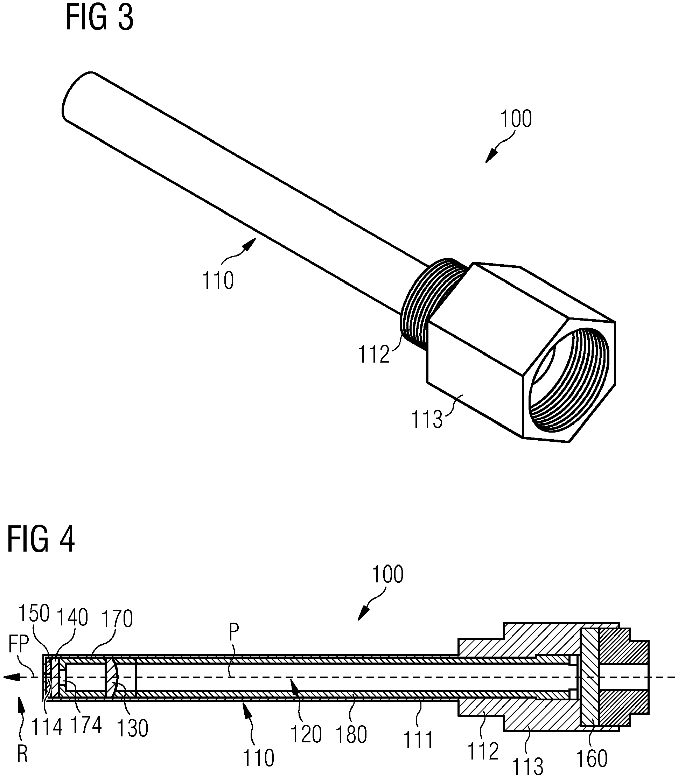

Figures 3 and 4 schematically depict an optical probe 100 according to an exemplary embodiment. Particularly, Figure 3 schematically depicts a perspective view of the optical probe 100 and Figure 4 schematically depicts a longitudinal cross-sectional view of the optical probe 100.

The optical probe 100 is for a gas turbine, for example the gas turbine as described with reference to Figure 1 and Figures 2A to 2B. The probe 100 comprises a body 110 having a passageway 120 arranged therethrough to define an optical path P. The probe 100 comprises an optical focussing member 130 arranged in the passageway 120 to define an optical focal point FP in a region R therebeyond. The probe 100 comprises a first optical window 140 arranged in the passageway 120 between the optical focussing member 130 and the optical focal point FP. The probe 100 comprises a first sealing member 150 arranged between the first optical window 140 and the body 110 to isolate the passageway 120 from the region R.

In this way, the probe 100 may be provided through a wall of the gas turbine, enabling *in situ* and/or online determination of fuel quality of fuel therein by atomic emission spectroscopy, for example. In this way, the determined fuel quality and/or a lower calorific value (LCV) may be used to determine (re)ignition parameters for (re-)starting the gas turbine, rather than using historic fuel quality information, for example, thereby improving a likelihood of (re-)starting.

In this way, the probe 100 may be provided through a wall of the gas turbine, enabling *in situ* and/or online determination of a combustion product and/or a plurality of combustion products therein by atomic emission spectroscopy, for example. In this way, the determined combustion product(s) may be used to identify and/or control emissions from the gas turbine.

In this way, the probe 100 may be provided through an aperture or casing wall of the gas turbine and/or combustor hardware, enabling laser ignition of fuel therein, for example. In this way, reliability of (re-)starting the gas turbine may be improved.

Generally, a size of the probe 100 generally corresponds with a size of a conventional electrical igniter for the gas turbine. The probe 100 may be physically and functionally interchangeable with conventional high energy spark igniters.

In more detail, the body 110 comprises an elongate body 110, having a length of about 150 mm, arranged to extend through, for example completely through, a wall of the gas turbine. The body 110 comprises a tubular portion 111, having a circular cross-section, having an external diameter of 12 mm and a wall thickness of 1 mm. The tubular portion 111 has an open end and a partially closed end, the partially closed end having a central aperture 114 therethrough, the central aperture 114 having a diameter of 2 mm. The body 110 is formed from Inconel 600 (i.e. a heat-resistant material). The body 110 comprises an externally threaded portion 112, having a diameter greater than that of the tubular portion 111, arranged towards an opposed end of the body 110 with respect to the first optical window 140. The externally threaded portion 112 corresponds with an externally threaded portion of a conventional electrical igniter. The body 110 comprises a nut 113, having a hexagonal cross-section, for tightening the probe 100 into a corresponding internally threaded portion in the gas turbine. The body 110 comprises an internally threaded portion 113 at the opposed end of the body 110 with respect to the first optical window 140, for coupling the probe 100 to a housing, for example. The probe 100 comprises a second optical window 160 arranged in the passageway 120.

The optical focussing member 130 is a plano-convex lens 130, having an effective focal length of 18 mm typically. The first optical window 140 is a planar optical window 140, formed from fused silica. The first sealing member 150 is a gasket (i.e. a sheet material), having an aperture therethrough, formed from Thermiculite 815 or a similar resilient proprietary material having high temperature sealing properties to withstand the local environment temperature and pressure conditions, as described previously.

The probe 100 comprises a spacing member 170 arranged to define a spacing between the optical focussing member 130 and the first optical window 140. Particularly, the spacing member 170 is arranged between the optical focussing member 130 and the first optical window 140 and is in contact with the optical focussing member 130 and the first optical window 140. The spacing member 170 is tubular, having an open end and a partially closed end, the partially closed end having a central aperture 174 therethrough.

The probe includes an inner plug 180 (also known as a locking screw), arranged to line the passageway 120 to positively locate the optical focussing member 130 and the optical window and maintain adequate forces for effective sealing.

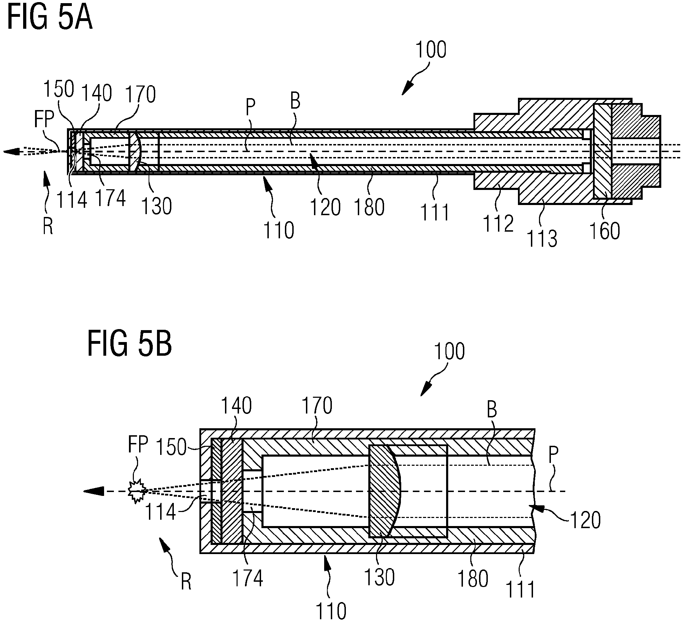

Figures 5A and 5B schematically depict the optical probe 100 of Figure 3, in use. Particularly, Figure 5A schematically depicts a longitudinal cross-sectional view of the optical probe 100, in use, as described with respect to Figure 4B. Figure 5B schematically depicts an enlarged part of the longitudinal cross-sectional view of Figure 5A.

In more detail, a laser beam B (i.e. a plurality of pulses) having a diameter of typically 6 mm is transmitted through the second optical window 160 into the passageway 120 and focused by the optical focussing member 130 through the first optical window 140 at the focal point FP in the region R, approximately 4 mm from an end of the body 110. In this way, fuel in the gas turbine may be ignited and/or a fuel quality of the fuel therein determined by LIBS.

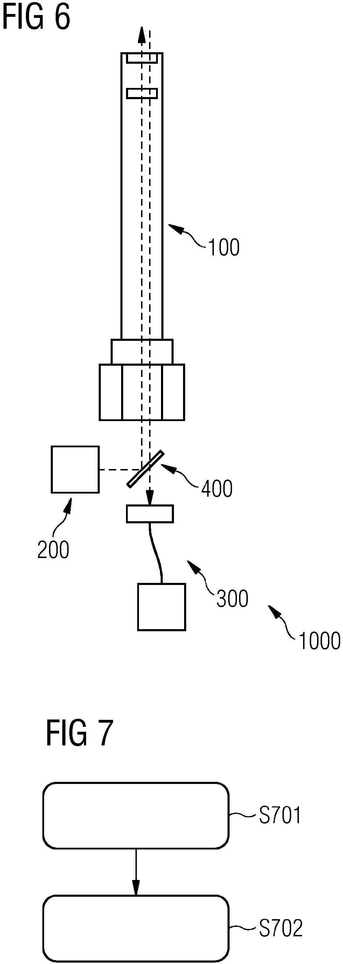

Figure 6 schematically depicts a laser assembly 1000 according to an exemplary embodiment, in use. The assembly 1000 comprises a laser 200 and the optical probe 100. In this way, the assembly 1000 may be used to ignite fuel in the gas turbine using the laser and/or form a plasma for LIBS.

In more detail, the laser 200 is a Nd:YAG solid-state laser 200. The assembly 1000 comprises an optical detector 300, specifically a spectrophotometer 300 having a spectral range of from 200 nm to 1000 nm. The assembly 1000 comprises a dichroic optical member 400, specifically a dichroic mirror 400. The optical detector 300 is arranged on a linear optical path, coincident with the optical path defined by the probe 100.

An incident laser beam IB from the laser 200 is transmitted along the optical path of the probe 100, via reflection by the angled dichroic mirror 400, for LIBS analysis. Light emitted, for example by atomic emission spectroscopy of fuel and/or a combustion product thereof, is transmitted along the optical path of the probe 100 and through the dichroic optical member to the optical detector 300. For example, the emitted light may be coupled (using any suitable combination of optical elements) into an optical fibre (multimode solid core optical fibre) and transmitted to a spectrometer.

Additionally and/or alternatively, an incident laser beam IB from the laser 200 is transmitted along the optical path of the probe 100, via reflection by the angled dichroic mirror 400, for ignition of fuel in the gas turbine.

Figure 7 schematically depicts a method of installing an optical probe, such as the optical probe 100, according to an exemplary embodiment.

At S701, an electrical igniter is removed from the gas turbine, for example by unscrewing the electrical igniter from a threaded aperture therein.

At S702, the removed electrical igniter is replaced with the probe, for example by screwing the probe into the same threaded aperture.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features having different dimensions.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. An optical probe (100) for a gas turbine, the probe (100) comprising:
a body (110) having a passageway (120) arranged therethrough to define an optical path (P);
an optical focussing member (130) arranged in the passageway (120) to define an optical focal point (FP) in a region (R) therebeyond; and
a first optical window (140) arranged in the passageway (120) between the optical focussing member (130) and the optical focal point (FP);
wherein the probe (100) comprises a first sealing member (150) arranged between the first optical window (140) and the body (110) to isolate the passageway (120) from the region (R).

2. The probe (100) according to claim 1, wherein the first sealing member (150) comprises a sheet material.

3. The probe (100) according to any previous claim, wherein the first sealing member (150) comprises at least one selected from a group comprising: graphite, mica, aramid, glass, carbon fibre, PTFE and vermiculite

4. The probe (100) according to any previous claim, wherein the first optical window (140) comprises a planar optical window.

5. The probe (100) according to any previous claim, wherein the first optical window (140) comprises at least one selected from a group comprising: fused silica, sapphire, calcium fluoride, magnesium fluoride, crystal quartz and borosilicate glass.

6. The probe (100) according to any previous claim, wherein the body (110) comprises a high temperature alloy.

7. The probe (100) according to any previous claim, wherein the body (110) comprises an externally threaded portion (112).

8. The probe (100) according to any previous claim, wherein the optical focussing member (130) comprises a plano-convex lens.

9. The probe (100) according to any previous claim, comprising a spacing member (170) arranged to define a spacing between the optical focussing member (130) and the first optical window (140).

10. The probe (100) according to any previous claim, comprising a second optical window (160) arranged in the passageway (120).

11. A laser assembly (1000) for a gas turbine, the assembly comprising a laser (200) and an optical probe (100) according to any of claims 1 to 10.

12. The assembly (1000) according to claim 11, comprising an optical detector (300).

13. The assembly (1000) according to claim 12, comprising a dichroic optical member (400).

14. A method of installing an optical probe according to any of claims 1 to 10 in a gas turbine, the method comprising:
removing an electrical igniter from the gas turbine (S701); and
replacing the removed electrical igniter with the probe (S702).

15. Use of an optical probe (100) according to any of claims 1 to 10 for spectroscopy in a gas turbine, for example atomic emission spectroscopy such as laser induced breakdown spectroscopy (LIBS) or flame spectroscopy of fuel and/or a combustion product thereof, and/or ignition of fuel in the gas turbine.
